(19) Europäisches Patentamt / European Patent Office / Office européen des brevets

(11) **EP 4 113 107 B1**

(12) **EUROPÄISCHE PATENTSCHRIFT**

(45) Veröffentlichungstag und Bekanntmachung des Hinweises auf die Patenterteilung:
**16.04.2025 Patentblatt 2025/16**

(21) Anmeldenummer: **22181481.7**

(22) Anmeldetag: **28.06.2022**

(51) Internationale Patentklassifikation (IPC):
*G01N 23/044* (2018.01)   *H01M 10/42* (2006.01)

(52) Gemeinsame Patentklassifikation (CPC):
**G01N 23/044; H01M 10/0463; H01M 10/0525; H01M 10/0585;** Y02E 60/10

(54) **VERFAHREN ZUR BESTIMMUNG EINER ABLAGEGENAUIGKEIT EINER MEHRZAHL VON ELEKTRODENBLÄTTERN IN EINEM STAPEL**

METHOD FOR DETERMINING A DEPOSIT ACCURACY OF A PLURALITY OF ELECTRODE SHEETS IN A STACK

PROCÉDÉ DE DÉTERMINATION D'UNE PRÉCISION DE POSE D'UNE PLURALITÉ DE FEUILLES D'ÉLECTRODE DANS UN EMPILEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.07.2021 DE 102021117152**

(43) Veröffentlichungstag der Anmeldung:
**04.01.2023 Patentblatt 2023/01**

(73) Patentinhaber: **PowerCo SE**
**38239 Salzgitter (DE)**

(72) Erfinder:
• **Kraken, Mathias**
**38102 Braunschweig (DE)**
• **Rohkohl, Erik**
**38300 Wolfenbüttel (DE)**
• **Rathmann, Sven**
**38108 Braunschweig (DE)**
• **Schönemann, Malte**
**38104 Braunschweig (DE)**
• **Tornow, Alexander**
**29369 Ummern (DE)**

(74) Vertreter: **karo IP**
**Patentanwälte PartG mbB**
**Steinstraße 16-18**
**40212 Düsseldorf (DE)**

(56) Entgegenhaltungen:
EP-A1- 3 826 090       DE-A1- 102020 112 814
JP-A- 2011 039 014     KR-A- 20200 088 222
KR-B1- 102 236 815     US-A1- 2020 350 637

**Beschreibung**

Die Erfindung betrifft ein Verfahren zur Bestimmung einer Ablagegenauigkeit einer Mehrzahl von Elektrodenblättern in einem Stapel. Die Elektrodenblätter erstrecken sich in zueinander parallelen Ebenen und sind aufeinander gestapelt angeordnet und bilden einen Stapel. Die Ablagegenauigkeit beschreibt die Positionen der Kanten aller Elektrodenblätter zueinander in dem Stapel.

Für den Antrieb von Kraftfahrzeugen werden vermehrt Batterien, insbesondere Lithium-Ionen-Batterien eingesetzt. Batterien werden üblicherweise aus Zellen zusammengesetzt, wobei jede Zelle einen Stapel von Anoden-, Kathoden- und ggf. Separator-Blättern bzw. Separatormaterial aufweist. Diese Anoden-, Kathoden-Blätter und ggf. Separatorblätter werden im Folgenden als Elektrodenblätter bezeichnet.

Die Elektrodenblätter werden üblicherweise durch Stanzen oder Schneiden, z. B. Laserschneiden, hergestellt.

Die Ablagegenauigkeit der einzelnen Elektrodenblätter in einem Stapel hat einen signifikanten Einfluss auf sicherheitsrelevante Qualitätskriterien von Lithium-Ionen Batteriezellen und auf deren Leistungsfähigkeit. Die Ablagegenauigkeit, also die Abweichung der Positionen der einzelnen Elektrodenblätter voneinander, ist daher in engen Grenzen einzuhalten. Eine etablierte Methode zur Ermittlung der Ablagegenauigkeit ist die Computertomographie (CT). Dabei wird durch eine langwierige Messung ein drei-dimensionales Bild eines Stapels generiert. Diese Methode ist sehr kostspielig und daher nur eingeschränkt für den Einsatz in einer Produktionslinie geeignet.

Im Gegensatz zu einer Computertomographie gibt es auch Messvorrichtungen, die eine zwei-dimensionale Abbildung des Stapels bzw. des Prüfobjekts durch Röntgenstrahlung ermöglichen. Diese sind im Gegensatz zur Computertomographie deutlich günstiger und darüber hinaus in der Lage, Messungen schneller durchzuführen. Eine direkte Messung der Position der Elektrodenblätter relativ zueinander ist auf diese Weise allerdings nicht möglich.

Aus der KR 10 2020 0088 222 A ist eine Fördereinrichtung für eine Batteriezelle bekannt. Dabei umfasst die Fördereinrichtung Röntgenstrahlenquellen, durch die die Kanten der einzelnen Lagen der Batteriezelle abgetastet werden. Dabei werden die Röntgenstrahlenquellen so ausgerichtet, dass die Röntgenstrahlen parallel zur erfassenden Kante der Lagen ausgerichtet sind.

Aus der WO 2016/114257 A1 ist bekannt, mittels Röntgenstrahlen die Kanten der beschichteten Bereiche einer Elektrodenfolie zu erfassen. Dabei werden die Röntgenstrahlenquellen so ausgerichtet, dass die Röntgenstrahlen parallel zur erfassenden Kante der Lagen ausgerichtet sind.

Aus der DE 10 2020 112 814 A1 ist ein Gerät zur Überprüfung von Batteriezellen mit Radiographie bekannt. Dabei kann die Batteriezelle gegenüber der Röntgenquelle bewegt werden. Dabei werden die Röntgenstrahlenquellen so ausgerichtet, dass die Röntgenstrahlen parallel zur erfassenden Kante der Lagen ausgerichtet sind.

Die KR 102 236 815 B1 ist auf ein Verfahren zur Identifikation von Fehlern in einem Stapel Elektrodenblätter gerichtet. Der Stapel wird aus zwei Positionen mit Röntgenstrahlung beaufschlagt.

Die EP 3 826 090 A1 und die JP 2011 039014 A sind jeweils auf ein System zur Erkennung von Lageabweichungen von Elektrodenblättern gerichtet. Dabei werden die Kanten eines Stapels von Elektrodenblättern mit einer Röntgenquelle bestrahlt.

Aufgabe der vorliegenden Erfindung ist es, die angeführten Probleme zumindest teilweise zu lösen. Insbesondere soll ein Verfahren zur Bestimmung einer Ablagegenauigkeit einer Mehrzahl von Elektrodenblättern in einem Stapel vorgeschlagen werden. Es sollen insbesondere die Positionen jedes einzelnen Elektrodenblatts ermittelt werden können, so dass eine Zuordnung einer Abweichung zu einem bestimmten Elektrodenblatt des Stapels möglich ist.

Zur Lösung dieser Aufgaben trägt ein Verfahren mit den Merkmalen gemäß Patentanspruch 1 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und/oder Details aus den Figuren ergänzt werden, wobei weitere Ausführungsvarianten der Erfindung aufgezeigt werden.

Es wird ein Verfahren zur Bestimmung einer Ablagegenauigkeit einer Mehrzahl von Elektrodenblättern vorgeschlagen. Die Elektrodenblätter erstrecken sich in zueinander parallelen Ebenen, sind aufeinander gestapelt angeordnet und bilden einen Stapel. Die Ablagegenauigkeit beschreibt die Positionen der Kanten aller Elektrodenblätter zueinander in dem Stapel bzw. die Exaktheit der Überdeckung der Kanten der Elektrodenblätter. Das Verfahren wird mit einer Messvorrichtung durchgeführt, die eine zwei-dimensional auflösende Röntgenanlage mit mindestens einer Strahlquelle für eine Röntgenstrahlung und einen Detektor aufweist. Das Verfahren umfasst zumindest die folgenden Schritte:

a) Bereitstellen des Stapels und Anordnen des Stapels in der Messvorrichtung zwischen der mindestens einen Strahlquelle und dem Detektor;
b) Bestrahlen des Stapels mit der mindestens einen Strahlquelle aus einer ersten Raumkoordinate, wobei die Strahlrichtung zumindest quer zu den Ebenen und hin zum Detektor verläuft, wobei ein Strahl der Strahlquelle die übereinander angeordneten Kanten der Elektrodenblätter erfasst und eine zwei-dimensionale erste Kontur der Kanten des Stapels auf den Detektor projiziert;

c) Bestrahlen des Stapels mit der mindestens einen Strahlquelle aus mindestens einer von der ersten Raumkoordinate abweichenden zweiten Raumkoordinate, wobei der Strahl die übereinander angeordneten Kanten der Elektrodenblätter erfasst und eine zwei-dimensionale zweite Kontur der Kanten des Stapels auf den Detektor projiziert;

d) Erfassen der ersten Kontur mit dem Detektor;

e) Erfassen der mindestens einen zweiten Kontur mit dem Detektor;

f) Auswerten der verschiedenen Konturen und Bestimmen der Positionen der Kanten der Elektrodenblätter.

Die obige (nicht abschließende) Einteilung der Verfahrensschritte in a) bis f) soll vorrangig nur zur Unterscheidung dienen und keine Reihenfolge und/oder Abhängigkeit erzwingen. Auch die Häufigkeit der Verfahrensschritte z. B. während der Durchführung des Verfahrens kann variieren. Ebenso ist möglich, dass Verfahrensschritte einander zumindest teilweise zeitlich überlagern. Ganz besonders bevorzugt finden der Verfahrensschritt a) zeitlich vor den Schritten b) bis f) statt. Insbesondere finden die Schritte b) und c) zeitlich versetzt zueinander statt. Insbesondere findet Schritt d) zeitlich parallel zu Schritt b) und Schritt e) zeitlich parallel zu Schritt c) statt. Insbesondere können die Schritte c) und e) mehrmals durchgeführt werden, wobei die jeweilige Raumkoordinate sich von den vorherigen Raumkoordinaten unterscheidet. Insbesondere werden die Schritte a) bis f) in der folgenden Reihenfolge durchgeführt: Schritt a), Schritt b), Schritt d), Schritt c), Schritt e), Schritt f).

Das Verfahren wird insbesondere im Rahmen eines Herstellungsverfahrens für Batteriezellen eingesetzt. Dabei werden in passende Form zurecht geschnittene Elektrodenblätter, also Anoden-, Kathoden-Blätter und ggf. Separatorblätter, in einer vorbestimmten Reihenfolge zu einem Stapel angeordnet und zueinander ausgerichtet. In dem so erzeugten Stapel sollen die einzelnen Elektrodenblätter in möglichst fluchtender (Kanten-)Lage zueinander angeordnet sein.

Die Elektrodenblätter erstrecken sich insbesondere in zueinander parallelen Ebenen und bilden, aufeinander gestapelt angeordnet, einen Stapel. Der Stapel umfasst mindestens zwei Elektrodenblätter, also zumindest ein Anodenblatt und ein Kathodenblatt. Zwischen einem Anodenblatt und einem Kathodenblatt ist jeweils ein Separatormaterial angeordnet. Dieses kann z. B. als Beschichtung auf einem von Anodenblatt und Kathodenblatt oder als ein separates Separatorblatt ausgeführt sein.

Die Elektrodenblätter weisen insbesondere eine jeweils im Wesentlichen rechteckige Form auf. Ggf. erstrecken sich Ableiterfähnchen über diese rechteckige Form hinaus. Diese sind im Allgemeinen unbeschichtet, also nicht mit dem Aktivmaterial beschichtet, ausgeführt und dienen der elektrischen Kontaktierung des jeweiligen Elektrodenblatts, also des Anoden- bzw. des Kathodenblatts.

Die Ablagegenauigkeit beschreibt insbesondere die Positionen der Kanten aller Elektrodenblätter zueinander in dem Stapel. Insbesondere sollen die Elektrodenblätter in einer vorbestimmten Lage zueinander angeordnet sein. Da sich die Größe von Anodenblättern und Kathodenblättern sowie von den ggf. vorhandenen Separatorblättern voneinander unterscheiden können, wird die Ablagegenauigkeit insbesondere an den Kanten der Elektrodenblätter bestimmt, die entlang einer sich quer zu den Ebenen erstreckenden ersten Richtung fluchtend zueinander angeordnet sind.

Insbesondere wird die Ablagegenauigkeit der Elektrodenblätter nur an einer jeweils einer Kante eines Elektrodenblatts bestimmt.

Das Verfahren wird insbesondere mit einer Messvorrichtung durchgeführt, die eine zwei-dimensional auflösende Röntgenanlage mit mindestens einer Strahlquelle für eine Röntgenstrahlung und einen Detektor aufweist. Es können mehrere festinstallierte oder auch bewegliche Strahlquellen vorgesehen sein. Es können auch mehrere festinstallierte oder auch bewegliche Detektoren vorgesehen sein.

Eine Strahlquelle dient zum Aussenden einer Röntgenstrahlung entlang einer Strahlrichtung. Ein Detektor dient der Aufnahme der Röntgenstrahlung zur Darstellung eines Röntgenbildes.

Der Detektor ermöglicht insbesondere die Darstellung eines zwei-dimensionalen Bildes der Röntgenstrahlung. Das vorgeschlagene Verfahren soll eine Ablagegenauigkeit der Elektrodenblätter aus diesen zwei-dimensionalen Bildern des Detektors ermöglichen.

Gemäß Schritt a) erfolgt ein Bereitstellen des Stapels und Anordnen des Stapels in der Messvorrichtung zwischen der mindestens einen Strahlquelle und dem Detektor. Es ist möglich, dass der Stapel getrennt gebildet wird und dann insgesamt in der Messvorrichtung angeordnet wird. Es ist aber auch möglich, dass der Stapel selbst in der Messvorrichtung (teilweise) gebildet und damit gleichzeitig angeordnet wird.

Gemäß Schritt b) erfolgt ein Bestrahlen des Stapels mit der mindestens einen Strahlquelle aus einer ersten Raumkoordinate, wobei die Strahlrichtung zumindest quer zu den Ebenen und hin zum Detektor verläuft. Ein Strahl der Strahlquelle erfasst die übereinander angeordneten Kanten der Elektrodenblätter und projiziert eine zwei-dimensionale erste Kontur der Kanten des Stapels auf den Detektor. Insbesondere wird die Strahlquelle genau oberhalb der Kanten, also ohne einen seitlichen Versatz zu den Kanten, angeordnet.

Zur Anordnung des Stapels wird angenommen, dass sich die Kanten der Elektroden in einer vorbestimmten Soll-Position befinden. Die davon abweichende Ist-Position der Kanten wird im Rahmen des Verfahrens ermittelt.

Gemäß Schritt d) erfolgt ein Erfassen der ersten Kontur mit dem Detektor.

Gemäß Schritt c) erfolgt ein Bestrahlen des Stapels mit der mindestens einen Strahlquelle aus mindestens einer von der ersten Raumkoordinate abweichenden zweiten Raumkoordinate, wobei der Strahl die übereinander angeordneten Kanten der Elektrodenblätter erfasst und eine zwei-dimensionale zweite Kontur der Kanten des Stapels auf den Detektor projiziert.

Gemäß Schritt e) erfolgt ein Erfassen der mindestens einen zweiten Kontur mit dem Detektor;

Gemäß Schritt f) erfolgt ein Auswerten der verschiedenen Konturen und ein Bestimmen der Positionen der Kanten der Elektrodenblätter. Die Auswertung kann insbesondere durch ein System zur Datenverarbeitung erfolgen.

Insbesondere umfasst die Messvorrichtung ein System zur Datenverarbeitung, das Mittel aufweist, die zur Durchführung des Verfahrens geeignet ausgestattet, konfiguriert oder programmiert sind bzw. die das Verfahren ausführen. Die Mittel umfassen z. B. einen Prozessor und einen Speicher, in dem durch den Prozessor auszuführende Befehle gespeichert sind, sowie Datenleitungen oder Übertragungseinrichtungen, die eine Übertragung von Befehlen, Messwerten, Daten oder ähnlichem zwischen den angeführten Elementen ermöglichen.

Eine durch den Detektor erfasste Kontur umfasst ein zwei-dimensionales Bild, in dem die Kanten der Elektrodenblätter anhand der Übergänge zwischen Farbintensitäten identifiziert werden können. Eine Zuordnung der in der Kontur vorliegenden Kanten zu einzelnen Elektrodenblätter ist ohne weiteres nicht möglich. Im Folgenden wird eine Möglichkeit vorgeschlagen, mit der diese Zuordnung realisiert wird.

Im Rahmen des Verfahrens werden mehrere Konturen des einen Stapels durch die Strahlquelle erzeugt und durch den Detektor erfasst. Infolge der unterschiedlichen Anordnung der Strahlquelle gegenüber dem Stapel bzw. den Kanten, werden voneinander unterschiedliche Konturen erzeugt. Diese Konturen werden insbesondere mittels Geradengleichungen ausgewertet, d. h. aus der bekannten Anordnung von Strahlquelle und Detektor und dem linear, also geradlinigen Verlaufs des von der Strahlquelle erzeugten Strahls, kann aus der Lage der Kanten in der jeweiligen Kontur auf die Position der jeweiligen Kante in dem Stapel geschlossen werden. Dabei werden insbesondere so viele voneinander unterschiedliche Konturen erzeugt wie nötig, um für jedes der in dem Stapel vorliegenden Elektrodenblätter die Position der Kante zu bestimmen.

Insbesondere sind dabei zwei unterschiedliche Ausgestaltungen des Verfahrens möglich, die ggf. miteinander kombiniert werden können.

Bei einer ersten Ausgestaltung wird die Strahlquelle zwischen den Schritten b) und d) parallel zu den Ebenen hin zu der zweiten Raumkoordinate bewegt. Bei einer zweiten Ausgestaltung wird die Strahlquelle zwischen den Schritten b) und d) quer zu den Ebenen hin zu der zweiten Raumkoordinate bewegt. Die so erzeugten unterschiedlichen Konturen ermöglichen die eindeutige Bestimmung der Kante jedes Elektrodenblatts.

Insbesondere unterscheiden sich die erste Raumkoordinate und die mindestens eine zweite Raumkoordinate durch einen voneinander unterschiedlichen Abstand von dem Stapel. Der Abstand erstreckt sich entlang einer sich quer zu den Ebenen erstreckenden ersten Richtung. Alternativ oder zusätzlich unterscheiden sich die erste Raumkoordinate und die mindestens eine zweite Raumkoordinate durch eine voneinander unterschiedliche Distanz zu den Kanten, wobei die Distanz sich entlang einer parallel zu den Ebenen und quer zu den Kanten verlaufenden zweiten Richtung erstreckt.

Insbesondere werden die Schritte c) und e) jeweils mehrfach durchgeführt, wobei sich die zweiten Raumkoordinaten jedes Schrittes c) von den jeweils vorherigen zweiten Raumkoordinaten der vorherigen Schritte c) in der beschriebenen Weise, also gemäß der ersten Ausgestaltung und/oder der zweiten Ausgestaltung, unterscheiden.

Insbesondere erfolgt in Schritt f) eine Zuordnung der einzelnen Kanten in der jeweiligen Kontur zu der jeweiligen Raumkoordinate anhand von Geradengleichungen.

Im Folgenden wird diese Zuordnung beispielhaft beschrieben. Dabei werden der Stapel, die Stahlquelle und der Detektor in einer gemeinsamen Ebene betrachtet. Eine Raumkoordinate $z$ ist daher für alle Komponenten identisch. Die erste Richtung, also quer zu den Ebenen, erstreckt sich entlang einer $y$-Achse. Die zweite Richtung, also parallel zu den Ebenen erstreckt sich entlang einer $x$-Achse.

Die ersten Raumkoordinaten betragen z. B. $(x_{q1} | y_{q1})$, die zweiten Raumkoordinaten $(x_{q2} | y_{q2})$. Die zu bestimmenden Raumkoordinaten der Kante eines bestimmten Elektrodenblatts werden als $(x_e | y_e)$ bezeichnet. Die Lagen der Kanten dieses Elektrodenblatts in der vom Detektor erfassten ersten Kontur betragen $(x_{d1} | y_{d1})$ für die ersten Raumkoordinaten der Strahlquelle und in der zweiten Kontur $(x_{d2} | y_{d2})$ für die zweiten Raumkoordinaten der Strahlquelle.

Für die Geradengleichung der ersten Raumkoordinaten der Strahlquelle gilt:

$$(1) \qquad m_1 = \frac{\Delta y_1}{\Delta x_1} = \frac{y_{d1} - y_{q1}}{x_{d1} - x_{q1}}$$

$$(2) \qquad y = m_1 \cdot (x - x_{q1}) + y_{q1}$$

$$(3) \qquad y = m_1 x + b_1$$

Für die Geradengleichung der zweiten Raumkoordinaten der Strahlquelle gilt:

$$(1) \qquad m_2 = \frac{\Delta y_2}{\Delta x_2} = \frac{y_{d2} - y_{q2}}{x_{d2} - x_{q2}}$$

$$(2) \qquad y = m_2 \cdot (x - x_{q2}) + y_{q2}$$

$$(3) \qquad y = m_2 x + b_2$$

Diese Gleichungen werden gleichgesetzt, so dass gilt:

$$(4) \qquad m_1 \cdot x + b_1 = m_2 \cdot x + b_2$$

$$(5) \qquad \rightarrow (m_1 - m_2) \cdot x = b_2 - b_1$$

$$(6) \qquad \rightarrow x_e = \frac{b_2 - b_1}{(m_1 - m_2)}$$

$$(7) \qquad \rightarrow y_e = m_1 \cdot \frac{b_2 - b_1}{(m_1 - m_2)} + b_1$$

Insbesondere erfolgt in einem Schritt g) eine Bewertung der Ablagegenauigkeit. Für den Stapel ist ein Grenzwert für eine maximale Abweichung der Kontur von einer Soll-Position einer Kante vorgegeben. Für die maximale Abweichung wird angenommen, dass das dem Detektor nächstgelegene Elektrodenblatt die maximale Abweichung erzeugt.

Die maximale Abweichung ist der höchstens zulässige Unterschied zwischen der Soll-Position einer Kante in dem Stapel und einer Ist-Position der Kante. Bei Überschreitung der maximalen Abweichung wird insbesondere eine Maßnahme eingeleitet, z. B. wird der Stapel als nicht in Ordnung gekennzeichnet oder es erfolgt eine Anpassung des Herstellungsprozesses des Stapels.

Die maximale Abweichung wird insbesondere an der ersten Kontur festgestellt, bevorzugt unter Anwendung der Geradengleichung, also unter Berücksichtigung der ersten Raumkoordinaten gegenüber der Soll-Position der Kanten.

Für die maximale Abweichung wird angenommen, dass das dem Detektor nächstgelegene Elektrodenblatt die maximale Abweichung erzeugt. Dieses Elektrodenblatt ist damit am weitesten entfernt von der Strahlquelle angeordnet. Die in der Kontur erkennbare Abweichung der Position einer Kante von der Soll-Position ist, unter Berücksichtigung der Strahlengleichung, für das der Strahlenquelle am nächsten angeordnete Elektrodenblatt am stärksten ausgeprägt, also der Betrag der Abweichung ist dann am höchsten. Die in der Kontur erkennbare Abweichung der Position einer Kante von der Soll-Position ist für von der Strahlenquelle am weitesten entfernt angeordnete Elektrodenblatt am geringsten ausgeprägt, also der Betrag der Abweichung ist dann am niedrigsten.

Die Annahme, dass die maximale Abweichung von dem der Strahlenquelle am weitesten entfernt angeordnete Elektrodenblatt erzeugt wird, stellt insbesondere sicher, dass kein anderes Elektrodenblatt eine die maximale Abweichung überschreitende Abweichung von einer Soll-Position aufweisen kann.

Insbesondere werden für die Bestimmung der Ablagegenauigkeit zunächst nur die Schritte a), b), d), f) und g) durchgeführt und die Schritte c) und e) nur dann, wenn in Schritt g) eine Überschreitung des Grenzwerts festgestellt wird.

Es wird also z. B. jeder Stapel im Rahmen des vorliegenden Verfahrens im Hinblick auf die Ablagegenauigkeit überprüft, wobei aber nur bei Überschreitung des Grenzwerts eine Bestimmung der Positionen der Kanten aller Elektrodenblätter des Stapels erfolgt. Ansonsten wird für jeden Stapel nur überprüft, ob eine Überschreitung des Grenzwerts vorliegt.

Insbesondere werden, wenn eine Überschreitung des Grenzwerts festgestellt wird, die Schritte c) und e) genau zweimal mit voneinander unterschiedlichen (zweiten) Raumkoordinaten und dann die Schritte f) und g) erneut durchgeführt.

Insbesondere werden z. B. die ersten Raumkoordinaten so gewählt, dass sich die Strahlenquelle genau oberhalb, also in der ersten Richtung fluchtend zu der Soll-Position der Kanten des Stapels angeordnet ist. Insbesondere werden die zwei zweiten Raumkoordinaten dann so gewählt, dass die Strahlenquelle gegenüber den ersten Raumkoordinaten in der zweiten Richtung versetzt dazu angeordnet ist, insbesondere einmal hin zum Stapel versetzt, so dass die Strahlenquelle fluchtend zu dem Stapel angeordnet ist, und einmal weg vom Stapel versetzt, so dass die Strahlenquelle seitlich benachbart zu dem Stapel angeordnet ist.

Insbesondere werden, wenn in Schritt g) wiederholt die Überschreitung des Grenzwerts festgestellt wird, die Schritte c) und e) mit einer für die eindeutige Bestimmung der Positionen aller Kanten erforderlichen Anzahl an Wiederholungen durchgeführt.

Mit Hilfe dieses stufenweisen Verfahrens muss in der Produktion der Stapel bzw. der Herstellung der Batteriezellen insbesondere nicht jeder Stapel voll vermessen werden (also die Positionen der Kanten aller Elektrodenblätter bestimmt werden). Es können anhand weniger Konturen, also weniger Aufnahmen des Detektors, die maximale Abweichung in dem Stapel erfasst bzw. abgeschätzt werden. Liegt eine Überschreitung des Grenzwerts vor, können anhand weiterer Messungen die jeweiligen Positionen der Elektrodenblätter bestimmt werden. Ggf. erfolgt eine Bestimmung der Positionen nur für die Elektrodenblätter, die den Grenzwert überschreiten oder nur für eine bestimmte Auswahl der Elektrodenblätter, z. B. die mit der höchsten Abweichung, etc.

Insbesondere wird zumindest für Schritt f) eine künstliche Intelligenz eingesetzt. Mit Hilfe von künstlicher Intelligenz kann insbesondere das Bestimmen der Positionen der Kanten in den Konturen unterstützt werden. Weiter kann mit Hilfe künstlicher Intelligenz die Anzahl der für die Bestimmung der Positionen der Kanten aller Elektrodenblätter erforderlichen Geradengleichungen ggf. reduziert werden.

Insbesondere erfolgt das Auswerten der Konturen mit einem Convolutional Neural Network (CNN). Das Convolutional Neural Network lernt anhand eines synthetischen, also künstlich erzeugten, Datensatzes eines Stapels mit bekannten Positionen der Kanten der Elektrodenblätter, um dann aus den gemäß Schritt d) erfassten Konturen dieses Stapels die Position der Kante jedes Elektrodenblattes zu bestimmen.

Für die Anwendung des CNN und damit das vorliegend vorgeschlagene Gleichungssystem bestimmt ist, ist es insbesondere erforderlich, mindestens so viele Aufnahmen gemäß der Schritte b) und c) zu machen bzw. Konturen zu erzeugen und auszuwerten, wie die Anzahl der Elektrodenblätter ist, die vermessen werden sollen.

Für das Training des CNN kann insbesondere ein synthetischer Datensatz erzeugt werden, der eine zufällige Stapelanordnung (Elektrodenblattnummer im Stapel, Ausrichtung in der Ebene mit bekannten Positionen der Kante, etc.) auf die unterschiedlichen Konturen, erste Kontur und mindestens eine zweite Kontur, abbildet. Das CNN modelliert dann die umgekehrte Abbildung, also die Konturen auf die Stapelanordnung.

Anstatt mit einem Convolutional Neural Network kann die Auswertung auch mit einer anderen maschinellen bzw. automatisiert durchführbaren Lernmethode durchgeführt werden. Im Folgenden wird auf das Convolutional Neural Network und die dabei verwendeten Abläufe und Begriffe abgestellt.

Die Anwendung derartiger CNN für die Auswertung von Bildern bzw. Konturen, also Bildern des Detektors, ist grundsätzlich bekannt. Vorliegend wird die Verwendung von CNN für die Qualitätsbewertung von (Schnitt-)Kanten der Elektrodenblätter vorgeschlagen, also im Rahmen einer Herstellung von Batteriekomponenten.

Im Rahmen der Auswertung mit CNN kann, um eine automatisierte und inlinefähige Bewertung der Kanten zu implementieren, insbesondere zunächst ein Trainingsdatensatz, also der synthetische Datensatz erzeugt werden. Auf jeder Kontur bzw. auf jedem ersten Bild des Detektors dieses Trainingsdatensatzes kann der Verlauf der Kanten manuell markiert werden. Im Anschluss erfolgt ein manueller Export dieser manuellen Markierung, also des markierten Verlaufs der Kante, aus dem Werkzeug. Der Verlauf der Kanten in der Kontur, kodiert als Pixelmatrix, bildet die Stapel-Geometrie bzw. Anordnung der Kanten für den Trainingsdatensatz, den sogenannten Ground Truth, ab.

Bilder in dieser Menge enthalten lediglich Pixel mit dem Wert null ("0") oder eins ("1"), für keine Kante (z. B. Wert null) oder Kante (z. B. Wert eins) an der entsprechenden Stelle in der Kontur bzw. des ersten Bildes.

Im Folgenden wird ein CNN verwendet, um eine mathematische erste Abbildung der im ersten Bild dargestellten Kante auf ihre entsprechende Geometrie zu lernen. Das so trainierte CNN kann anschließend für zuvor nicht gelernte zweite Bilder des Detektors bzw. Konturen die Geometrie erkennen. Aufgrund der geringen Varianz der ersten und zweiten Bilder von im Wesentlichen gleichartigen Körpern, hier von Kanten von gestapelten Elektrodenblättern mit festgelegter Soll-Geometrie der Kanten, und der statistischen Signifikanz großer Datenmengen ist diese Erkennung genauer als vergleichbare Methoden, z. B. einer Trendkantenerkennung.

Das CNN besteht bekannterweise aus einer Reihe von sogenannten Convolutional-Schichten, die eine fixierte Anzahl von Filtern mit Bildausschnitten diskret falten. Für jeden ihrer Filter berechnet diese Schicht eine sogenannte Feature-Map. Diese Feature-Map beschreibt, ob ein Muster, definiert durch die Filter-Parameter, an der entsprechenden Stelle in dem jeweiligen zweiten Bild bzw. in der Kontur erkannt wurde. Die Größe dieser Feature- Maps wird mithilfe von sogenannten Max-Pooling-Schichten oder Average-Pooling-Schichten reduziert, um eine Berechnungskomplexität zu verringern. Die Max-Pooling- bzw. Average-Pooling-Schicht schiebt ein n x n Fenster über die Feature-Map und überträgt insbesondere nur den maximalen Wert aus einem Ausschnitt in die nächste Schicht.

Die Reihenfolge und Anzahl von Convolutional- und Max-Pooling- bzw. Average-Pooling-Schichten sowie die Größe der jeweiligen Fenster und Filter sind sogenannte Hyper-Parameter. Die Optimierung dieser Hyper-Parameter erfolgt insbesondere durch einen Validierungsdatensatz, der keinen Einfluss auf die Optimierung von Modell-Parametern hat.

Im letzten Schritt werden die Werte aller Feature-Maps untereinander zu einem Vektor verkettet, das sogenannte Flatten, und dienen damit als Eingabe in ein Feed-Forward Neural Network. Dieses Netzwerk ist wiederum durch eine variable Anzahl von verdeckten Schichten und einer variablen Anzahl von Neuronen in den jeweiligen verdeckten Schichten gekennzeichnet. Diese Anzahlen bilden weitere Hyper-Parameter.

Alternativ zum Flatten können mittels transponierter Convolution die kondensierten Feature-Maps zunächst wieder in die ursprüngliche Größe transformiert und ihre Anzahl mit Convolutional Schichten dann wieder bis auf eins reduziert werden.

In seiner Ausgabeschicht versucht das Netz, die manuell erzeugte Kantengeometrie des Ground Truth des Stapels zu approximieren, indem es jedem Pixel eine null oder eine eins ("1") zuordnet.

Zu Beginn des Trainings können die Filterparameter und die Parameter des Feed-Forward Neural Network (beide zusammen bilden das CNN) zufällig initialisiert werden, wobei dies zunächst zu einer ungenauen Geometrie-Vorhersage führt. Im Verlauf des Trainings werden alle Modell-Parameter mit einem sogenannten Gradientenabstiegsverfahren so angepasst, dass die Anzahl falsch klassifizierter Pixel über alle Trainingsbeispiele hinweg minimal ist.

Nach dem Training kann das CNN eingesetzt werden, um z. B. im Rahmen des Schrittes f) und/oder des Schrittes g) für unbekannte Stapel bzw. neu erstellte Konturen den Verlauf bzw. die Position mindestens einer Kante in der Kontur bzw. in dem zweiten Bild des Detektors zu erkennen.

Insbesondere wird in einem weiteren Schritt h) aus der Bewertung der Ablagegenauigkeit gemäß Schritt g) mindestens ein für die Herstellung des jeweiligen Stapels verwendeter Prozessparameter bestimmt und verändert, so dass eine Ablagegenauigkeit für weitere Stapel verbessert wird.

Insbesondere kann also, wenn z. B. eine Überschreitung eines Grenzwerts festgestellt wurde und/oder im Rahmen von Nachmessungen validiert wurde, das fehlerhaft positionierte Elektrodenblatt und dessen Abweichung von der Soll-Lage bestimmt werden. Entsprechend kann aus der Kenntnis des Elektrodenblatts dessen Herstellungsprozess rückverfolgt und ggf. einstellbare Prozessparameter verändert werden.

Insbesondere wird ein System zur Datenverarbeitung vorgeschlagen, das Mittel aufweist, die zur Durchführung des Verfahrens geeignet ausgestattet, konfiguriert oder programmiert sind bzw. die das Verfahren ausführen.

Die Mittel umfassen z. B. einen Prozessor und einen Speicher, in dem durch den Prozessor auszuführende Befehle gespeichert sind, sowie Datenleitungen oder Übertragungseinrichtungen, die eine Übertragung von Befehlen, Messwerten, Daten oder ähnlichem zwischen den angeführten Elementen ermöglichen.

Es wird weiter ein Computerprogramm vorgeschlagen, umfassend Befehle, die bei der Ausführung des Programms durch einen Computer diesen veranlassen, das beschriebene Verfahren bzw. die Schritte des beschriebenen Verfahrens auszuführen.

Es wird weiter ein computerlesbares Speichermedium vorgeschlagen, umfassend Befehle, die bei der Ausführung durch einen Computer diesen veranlassen, das beschriebene Verfahren bzw. die Schritte des beschriebenen Verfahrens auszuführen.

Die Ausführungen zu dem Verfahren sind insbesondere auf das System zur Datenverarbeitung und/oder das computerimplementierte Verfahren (also das Computerprogramm und das computerlesbare Speichermedium) übertragbar und umgekehrt.

Die Verwendung unbestimmter Artikel ("ein", "eine", "einer" und "eines"), insbesondere in den Patentansprüchen und der diese wiedergebenden Beschreibung, ist als solche und nicht als Zahlwort zu verstehen. Entsprechend damit eingeführte Begriffe bzw. Komponenten sind somit so zu verstehen, dass diese mindestens einmal vorhanden sind und insbesondere aber auch mehrfach vorhanden sein können.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung. Soweit ein Bauteil mehrfach vorkommen kann ("mindestens ein"), kann die Beschreibung zu einem dieser Bauteile für alle oder ein Teil der Mehrzahl dieser Bauteile gleichermaßen gelten, dies ist aber nicht zwingend.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:

Fig. 1: eine erste Ausführungsvariante des Verfahrens;

Fig. 2: eine zweite Ausführungsvariante des Verfahrens;

Fig. 3: Schritt f) des Verfahrens gemäß der ersten Ausführungsvariante;

Fig. 4: Schritte b), d) und g) des Verfahrens für einen ersten Stapel;

Fig. 5: Schritte b), d) und g) des Verfahrens für einen zweiten Stapel;

Fig. 6: Schritte c) und e) des Verfahrens für den ersten Stapel;

Fig. 7: wiederholte Durchführung der Schritte c) und e) des Verfahrens für den ersten Stapel;

Fig. 8: Schritte c) und e) des Verfahrens für den zweiten Stapel;

Fig. 9: wiederholte Durchführung der Schritte c) und e) des Verfahrens für den zweiten Stapel.

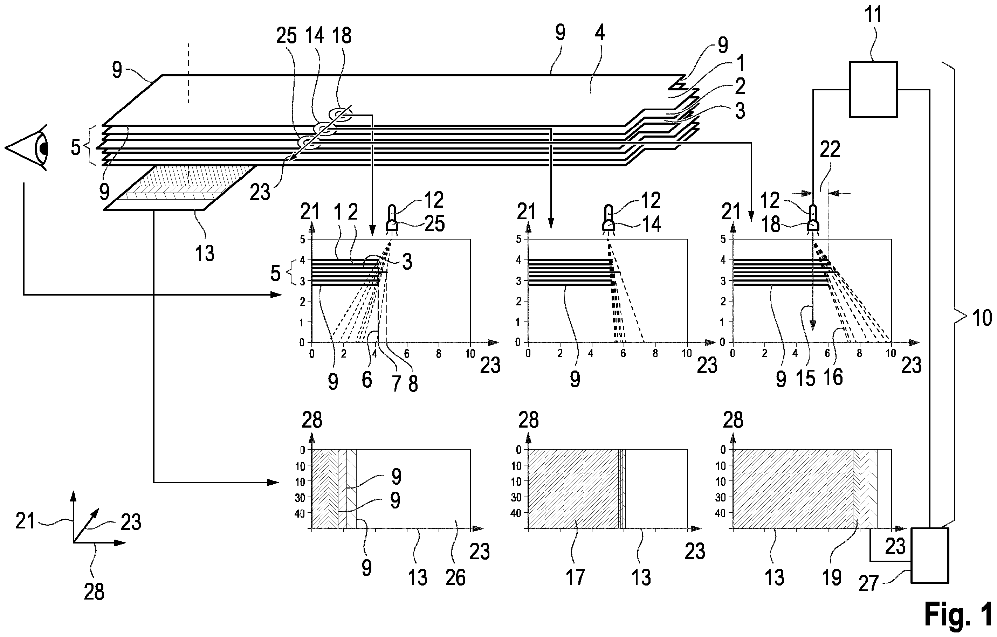

Die Fig. 1 zeigt eine erste Ausführungsvariante des Verfahrens. Das Verfahren wird im Rahmen eines Herstellungsverfahrens für Batteriezellen eingesetzt. Dabei werden in passende Form zurecht geschnittene Elektrodenblätter 1, 2, 3, also Anoden-, Kathoden-Blätter und ggf. Separatorblätter, in einer vorbestimmten Reihenfolge zu einem Stapel 5 angeordnet und zueinander ausgerichtet. In dem so erzeugten Stapel 5 sollen die einzelnen Elektrodenblätter 1, 2, 3 in möglichst fluchtender Lage zueinander angeordnet sein.

Die Elektrodenblätter 1, 2, 3 erstrecken sich in zueinander parallelen Ebenen 4 und bilden, aufeinander gestapelt angeordnet, einen Stapel 5. Der Stapel 5 umfasst eine Mehrzahl von Elektrodenblättern 1, 2, 3.

Die Elektrodenblätter 1, 2, 3 weisen eine jeweils im Wesentlichen rechteckige Form auf. Ableiterfähnchen erstrecken sich an einer Kante 9 der Elektrodenfolien 1, 2, 3 über diese rechteckige Form hinaus.

Die Ablagegenauigkeit beschreibt die Positionen 6, 7, 8 der Kanten 9 aller Elektrodenblätter 1, 2, 3 zueinander in dem Stapel 5. Die Elektrodenblätter 1, 2, 3 sollen in einer vorbestimmten Lage zueinander angeordnet sein. Da sich die Größe von Anodenblättern und Kathodenblättern sowie von den ggf. vorhandenen Separatorblättern voneinander unterscheiden können, wird die Ablagegenauigkeit an den Kanten 9 der Elektrodenblätter 1, 2, 3 bestimmt, die entlang einer sich quer zu den Ebenen 4 erstreckenden ersten Richtung 21 fluchtend zueinander angeordnet sind. Die Ablagegenauigkeit der Elektrodenblätter 1, 2, 3 wird nur an einer jeweils einer Kante 9 eines Elektrodenblatts 1, 2, 3 bestimmt.

Das Verfahren wird mit einer Messvorrichtung 10 durchgeführt, die eine zwei-dimensional auflösende Röntgenanlage 11 mit einer Strahlquelle 12 für eine Röntgenstrahlung und einen Detektor 13 aufweist. Die Strahlquelle 12 dient zum Aussenden einer Röntgenstrahlung entlang einer Strahlrichtung 15. Ein Detektor 13 dient der Aufnahme der Röntgenstrahlung zur Darstellung eines Röntgenbildes.

Der Detektor 13 ermöglicht die Darstellung eines zwei-dimensionalen Bildes (im Folgenden als Kontur 17, 19 bezeichnet) der Röntgenstrahlung. Das vorgeschlagene Verfahren ermöglicht eine Ablagegenauigkeit der Elektrodenblätter 1, 2, 3 aus diesen zwei-dimensionalen Bildern des Detektors 13.

Gemäß Schritt a) erfolgt ein Bereitstellen des Stapels 5 und Anordnen des Stapels 5 in der Messvorrichtung 10 zwischen der einen Strahlquelle 12 und dem Detektor 13. Gemäß Schritt b) erfolgt ein Bestrahlen des Stapels 5 mit der Strahlquelle 12 aus einer ersten Raumkoordinate 14, wobei die Strahlrichtung 15 quer zu den Ebenen 4 und hin zum Detektor 13 verläuft (im Wesentlichen entlang einer ersten Richtung 21). Ein Strahl 16 der Strahlquelle 12 erfasst die übereinander angeordneten Kanten 9 der Elektrodenblätter 1, 2, 3 und projiziert eine zweidimensionale erste Kontur 17 der Kanten 9 des Stapels 5 auf den Detektor 13. Die Strahlquelle 12 wird genau oberhalb der Kanten 9, also ohne einen seitlichen Versatz zu den Kanten 9, angeordnet.

Zur Anordnung des Stapels 5 wird angenommen, dass sich die Kanten 9 der Elektrodenblätter 1, 2, 3 in einer vorbestimmten Soll-Position befinden. Die davon abweichende Ist-Position 6, 7, 8 der Kanten 9 wird im Rahmen des Verfahrens ermittelt.

Gemäß Schritt d) erfolgt ein Erfassen der ersten Kontur 17 mit dem Detektor 13.

Gemäß Schritt c) erfolgt ein Bestrahlen des Stapels 5 mit der Strahlquelle 12 aus einer von der ersten Raumkoordinate 14 abweichenden zweiten Raumkoordinate 18, wobei der Strahl 16 die übereinander angeordneten Kanten 9 der Elektrodenblätter 1, 2, 3 erfasst und eine zweidimensionale zweite Kontur 19 der Kanten 9 des Stapels 5 auf den Detektor 13 projiziert.

Gemäß Schritt e) erfolgt ein Erfassen der zweiten Kontur 19 mit dem Detektor 13.

Es ist dargestellt, dass die Schritte c) und e) wiederholt durchgeführt werden, wobei sich die zweiten Raumkoordinaten 18 jedes Schrittes c) von den jeweils vorherigen zweiten Raumkoordinaten 18 der vorherigen Schritte c) unterscheiden. Die weiteren Raumkoordinaten dieser Wiederholung der Schritte c) und e) werden als dritte Raumkoordinaten 25 und die dabei erfasste Kontur als dritte Kontur 26 bezeichnet.

Gemäß Schritt f) erfolgt ein Auswerten der verschiedenen Konturen 17, 19, 26 und ein Bestimmen der Positionen 6, 7, 8 der Kanten 9 der Elektrodenblätter 1, 2, 3. Die Auswertung erfolgt durch das System 27 zur Datenverarbeitung.

Die Messvorrichtung 10 umfasst ein System 27 zur Datenverarbeitung, das Mittel aufweist, die zur Durchführung des Verfahrens geeignet ausgestattet, konfiguriert oder programmiert sind bzw. die das Verfahren ausführen. Die Mittel umfassen z. B. einen Prozessor und einen Speicher, in dem durch den Prozessor auszuführende Befehle gespeichert sind, sowie Datenleitungen oder Übertragungseinrichtungen, die eine Übertragung von Befehlen, Messwerten, Daten oder ähnlichem zwischen den angeführten Elementen ermöglichen.

Eine durch den Detektor 13 erfasste Kontur 17, 19, 26 umfasst ein zwei-dimensionales Bild, in dem die Kanten 9 der Elektrodenblätter 1, 2, 3 anhand der Übergänge zwischen Farbintensitäten identifiziert werden können. Eine Zuordnung der in der Kontur 17, 19, 26 vorliegenden Kanten 9 zu einzelnen Elektrodenblätter 1, 2, 3 ist ohne weiteres nicht möglich. Das beschriebene Verfahren stellt eine Möglichkeit dar, diese Zuordnung zu realisieren.

Im Rahmen des Verfahrens werden mehrere Konturen 17, 19, 26 des einen Stapels 5 durch die Strahlquelle 12 erzeugt und durch den Detektor 13 erfasst. Infolge der unterschiedlichen Anordnung der Strahlquelle 12 gegenüber dem Stapel 5 bzw. den Kanten 9, werden voneinander unterschiedliche Konturen 17, 19, 26 erzeugt. Diese Konturen 17, 19, 26 werden mittels Geradengleichungen ausgewertet, d. h. aus der bekannten Anordnung von Strahlquelle 12 und Detektor 13 und dem linear, also geradlinigen Verlaufs des von der Strahlquelle 12 erzeugten Strahls 16, kann aus der Lage der Kanten 9 in der jeweiligen Kontur 17, 19, 26 auf die Position 6, 7, 8 der jeweiligen Kante 9 in dem Stapel 5 geschlossen werden.

Die erste Raumkoordinate 14 und die mindestens eine zweite Raumkoordinate 18, 25 (also die zweite und die dritten Raumkoordinate) unterscheiden sich durch eine voneinander unterschiedliche Distanz 22 zu den Kanten 9, wobei die Distanz 22 sich entlang einer parallel zu den Ebenen 4 und quer zu den Kanten 9 verlaufenden zweiten Richtung 23 erstreckt. Eine dritte Richtung 28 erstreckt sich parallel zu den Kanten 9, die mit der Messvorrichtung 10 vermessen werden.

Die einzelnen Konturen 17, 19, 26 sind den jeweiligen Raumkoordinaten 14, 18, 25 durch Pfeile zugeordnet.

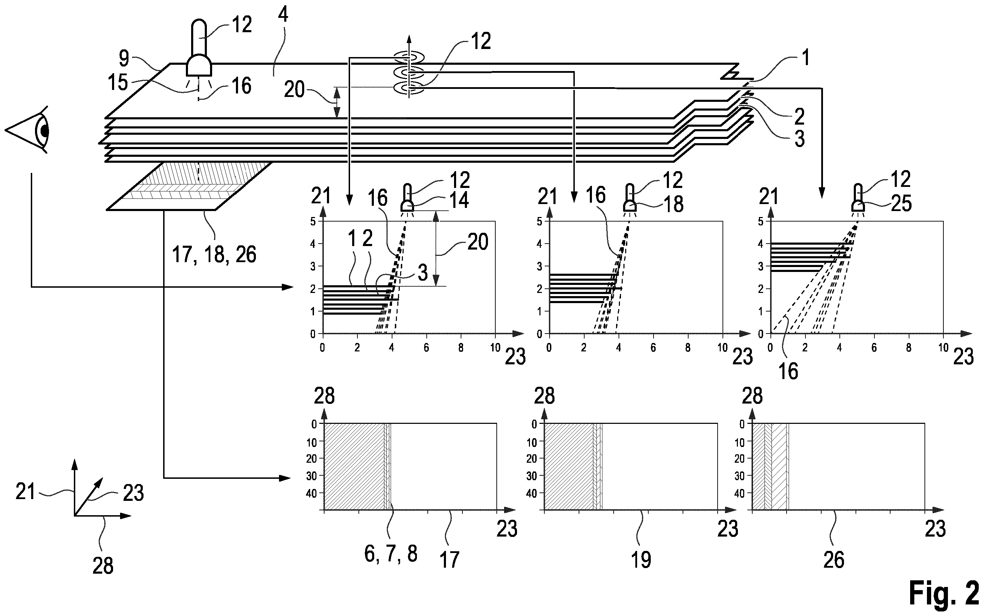

Fig. 2 zeigt eine zweite Ausführungsvariante des Verfahrens. Auf die Ausführungen zu Fig. 1 wird verwiesen.

Im Unterschied zur ersten Ausführungsvariante, bei der die Strahlquelle 12 zwischen den Schritten b) und d) parallel zu den Ebenen 4 hin zu der zweiten Raumkoordinate 18 bewegt wird, wird bei der zweiten Ausführungsvariante die Strahlquelle 12 zwischen den Schritten b) und d) quer zu den Ebenen 4 hin zu der zweiten Raumkoordinate 18 bzw. zu der dritten Raumkoordinate 25 bewegt. Die so erzeugten unterschiedlichen Konturen 17, 19, 26 ermöglichen ebenfalls die eindeutige Bestimmung der Kante 9 jedes Elektrodenblatts 1, 2, 3.

Die erste Raumkoordinate 14 und die mindestens eine zweite Raumkoordinate 18, 25 (also die zweite und die dritten Raumkoordinate) unterscheiden sich durch einen voneinander unterschiedlichen Abstand 20 von dem Stapel 5. Der Abstand 20 erstreckt sich entlang einer sich quer zu den Ebenen 4 erstreckenden ersten Richtung 21.

Die einzelnen Konturen 17, 19, 26 sind den jeweiligen Raumkoordinaten 14, 18, 25 durch Pfeile zugeordnet.

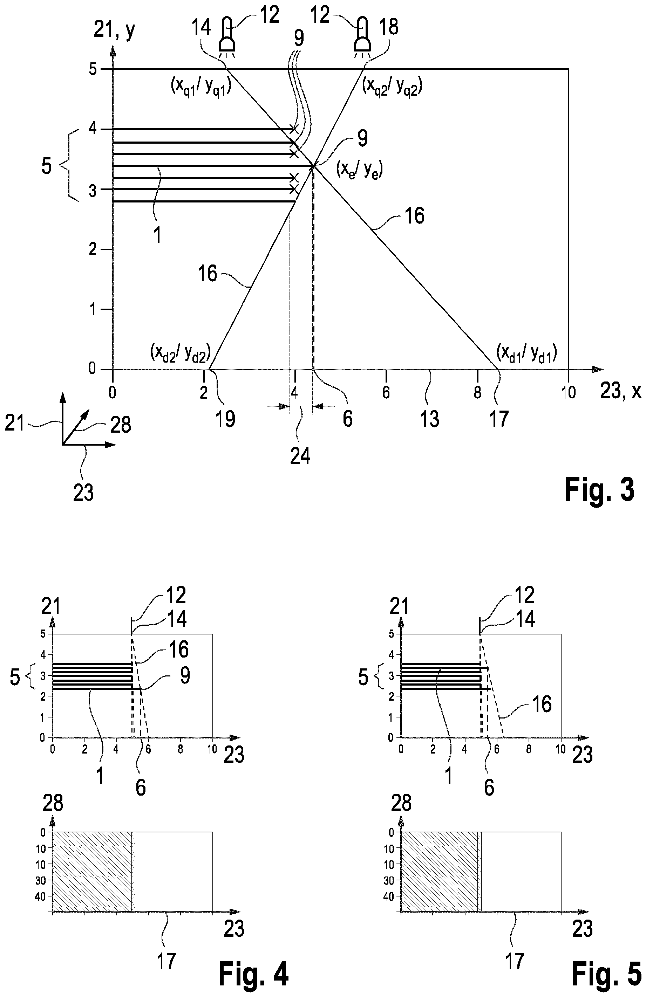

Fig. 3 zeigt Schritt f) des Verfahrens gemäß der ersten Ausführungsvariante. Auf die Ausführungen zu Fig. 1 wird verwiesen.

Gemäß Schritt f) erfolgt ein Auswerten der verschiedenen Konturen 17, 19, 26 und ein Bestimmen der Positionen 6, 7, 8 der Kanten 9 der Elektrodenblätter 1, 2, 3. Die Auswertung erfolgt durch das System 27 zur Datenverarbeitung.

Der Stapel 5, die Strahlquelle 12 und der Detektor 13 werden in einer gemeinsamen Ebene betrachtet. Eine Raumkoordinate z ist daher für alle Komponenten 1, 2, 3, 5, 12, 13 identisch. Die erste Richtung 21, also quer zu den Ebenen 4, erstreckt sich entlang einer y-Achse (hier die vertikale Achse im oberen Diagramm der Fig. 3. Die zweite Richtung 23, also parallel zu den Ebenen 4 erstreckt sich entlang der x-Achse (hier die horizontale Achse im oberen Diagramm der

Fig. 3). Eine dritte Richtung 28 erstreckt sich entlang einer z-Achse (hier die nach hinten weisende Achse im oberen Diagramm der Fig. 3).

Die ersten Raumkoordinaten 14 betragen ($x_{q1}$ | $y_{q1}$), die zweiten Raumkoordinaten 18 ($x_{q2}$ | $y_{q2}$). Die zu bestimmenden Raumkoordinaten der Kante 9 des ersten Elektrodenblatts 1, werden als ($x_e$ | $y_e$) bezeichnet. Die Lagen der Kante 9 dieses ersten Elektrodenblatts 1 in der vom Detektor 13 erfassten ersten Kontur 17 betragen

($x_{d1}$ | $y_{d1}$) für die ersten Raumkoordinaten 14 der Strahlquelle 12 und in der zweiten Kontur 19 ($x_{d2}$ | $y_{d2}$) für die zweiten Raumkoordinaten 18 der Strahlquelle 12.

Für die Geradengleichung der ersten Raumkoordinaten 14 der Strahlquelle 12 gilt:

$$(1) \qquad m_1 = \frac{\Delta y_1}{\Delta x_1} = \frac{y_{d1} - y_{q1}}{x_{d1} - x_{q1}}$$

$$(2) \qquad y = m_1 \cdot (x - x_{q1}) + y_{q1}$$

$$(3) \qquad y = m_1 x + b_1$$

Für die Geradengleichung der zweiten Raumkoordinaten 18 der Strahlquelle 12 gilt:

$$(1) \qquad m_2 = \frac{\Delta y_2}{\Delta x_2} = \frac{y_{d2} - y_{q2}}{x_{d2} - x_{q2}}$$

$$(2) \qquad y = m_2 \cdot (x - x_{q2}) + y_{q2}$$

$$(3) \qquad y = m_2 x + b_2$$

Diese Gleichungen werden gleichgesetzt, so dass gilt:

$$(4) \qquad m_1 \cdot x + b_1 = m_2 \cdot x + b_2$$

$$(5) \qquad \rightarrow (m_1 - m_2) \cdot x = b_2 - b_1$$

$$(6) \qquad \rightarrow x_e = \frac{b_2 - b_1}{(m_1 - m_2)}$$

$$(7) \qquad \rightarrow y_e = m_1 \cdot \frac{b_2 - b_1}{(m_1 - m_2)} + b_1$$

Die Raumkoordinaten der ($x_e$ | $y_e$) geben die erste Position 6 der Kante 9 des ersten Elektrodenblatts 1 an.

Fig. 4 zeigt Schritte b), d) und g) des Verfahrens für einen ersten Stapel 5. Auf die Ausführungen zu der Fig. 1 wird verwiesen.

Bei dem ersten Stapel 5 weist das unterste erste Elektrodenblatt 1 die größte Abweichung 24 von einer Soll-Position auf. In einem Schritt g) erfolgt eine Bewertung der Ablagegenauigkeit. Für den Stapel 5 ist ein Grenzwert für eine maximale Abweichung 24 der Kontur 17, 19, 26 (bzw. der in der Kontur erkennbaren Position der Kante 9) von einer Soll-Position einer Kante 9 vorgegeben. Für die maximale Abweichung 24 wird angenommen, dass das dem Detektor 13 nächstgelegene Elektrodenblatt 1, 2, 3 die maximale Abweichung 24 erzeugt.

Die maximale Abweichung 24 ist der höchstens zulässige Unterschied zwischen der Soll-Position einer Kante 9 in dem Stapel 5 und einer Ist-Position 6, 7, 8 der Kante 9. Die maximale Abweichung 24 wird an der ersten Kontur 17 festgestellt, unter Berücksichtigung der ersten Raumkoordinaten 14 gegenüber der Soll-Position der Kanten 9.

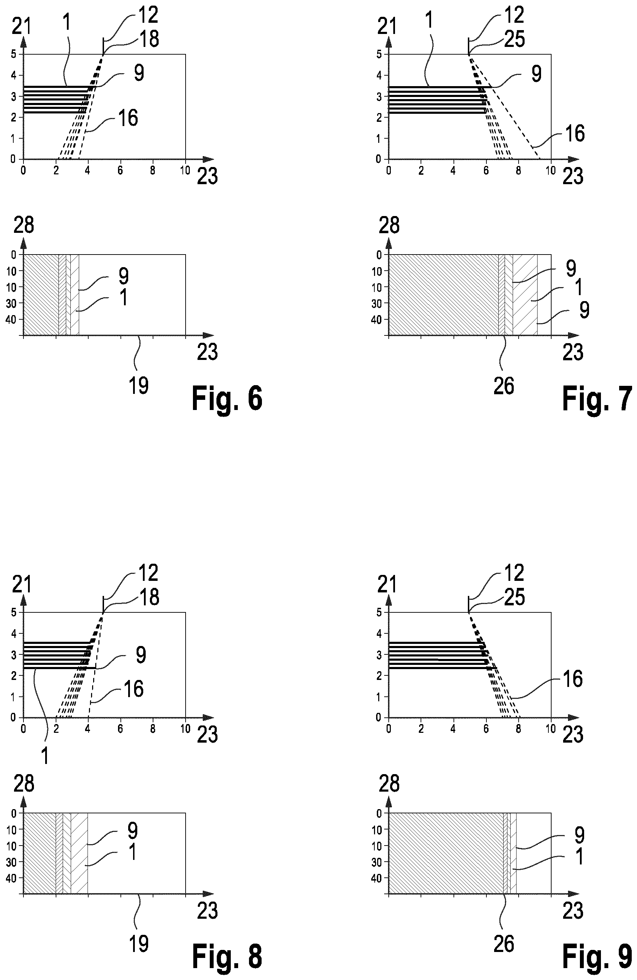

Für die Bestimmung der Ablagegenauigkeit werden zunächst nur die Schritte a), b), d), f) und g) durchgeführt und die Schritte c) und e) (siehe Fig. 8 und 9) nur dann, wenn in Schritt g) (siehe Fig. 4) eine Überschreitung des Grenzwerts festgestellt wird.

Es wird also z. B. jeder Stapel 5 im Rahmen des vorliegenden Verfahrens im Hinblick auf die Ablagegenauigkeit überprüft, wobei aber nur bei Überschreitung des Grenzwerts eine Bestimmung der Positionen 6, 7, 8 der Kanten 9 aller Elektrodenblätter 1, 2, 3 des Stapels 5 erfolgt. Ansonsten wird für jeden Stapel 5 nur überprüft, ob eine Überschreitung des Grenzwerts vorliegt.

Wenn eine Überschreitung des Grenzwerts festgestellt wird, werden die Schritte c) und e) genau zweimal mit voneinander unterschiedlichen (zweiten) Raumkoordinaten 18, 25 und dann die Schritte f) und g) erneut durchgeführt (siehe Fig. 8 und 9).

Die ersten Raumkoordinaten 14 werden so gewählt, dass sich die Strahlenquelle 12 genau oberhalb, also in der ersten Richtung 21 fluchtend zu der Soll-Position der Kanten 9 des Stapels 5 angeordnet ist (siehe Fig. 4). Die zwei zweiten Raumkoordinaten 18, 25 (also zweite und dritte Raumkoordinaten) werden dann so gewählt, dass die Strahlenquelle 12 gegenüber den ersten Raumkoordinaten 14 in der zweiten Richtung 23 versetzt dazu angeordnet ist, einmal hin zum Stapel 5 versetzt, so dass die Strahlenquelle 12 fluchtend zu dem Stapel 5 angeordnet ist, und einmal weg vom Stapel 5 versetzt, so dass die Strahlenquelle 12 seitlich benachbart zu dem Stapel 5 angeordnet ist (siehe Fig. 8 und 9).

Wenn in Schritt g) wiederholt die Überschreitung des Grenzwerts festgestellt wird, werden die Schritte c) und e) mit einer für die eindeutige Bestimmung der Positionen 6, 7, 8 aller Kanten 9 erforderlichen Anzahl an Wiederholungen durchgeführt.

Mit Hilfe dieses stufenweisen Verfahrens muss in der Produktion der Stapel 5 nicht jeder Stapel voll vermessen werden (also die Positionen 6, 7, 8 der Kanten 9 aller Elektrodenblätter 1, 2, 3 bestimmt werden). Es können anhand weniger Konturen 17, 19, 26, also weniger Aufnahmen des Detektors 13, die maximale Abweichung 24 in dem Stapel 5 erfasst bzw. abgeschätzt werden. Liegt eine Überschreitung des Grenzwerts vor, können anhand weiterer Messungen die jeweiligen Positionen 6, 7, 8 der Elektrodenblätter 1, 2, 3 bestimmt werden.

Fig. 5 zeigt Schritte b), d) und g) des Verfahrens für einen zweiten Stapel 5. Auf die Ausführungen zu der Fig. 4 wird verwiesen.

Bei dem zweiten Stapel 5 weist das oberste erste Elektrodenblatt 1 die größte Abweichung 24 von einer Soll-Position auf. In einem Schritt g) erfolgt eine Bewertung der Ablagegenauigkeit. Für den Stapel 5 ist ein Grenzwert für eine maximale Abweichung 24 der Kontur 17, 19, 26 (bzw. der in der Kontur erkennbaren Position der Kante 9) von einer Soll-Position einer Kante 9 vorgegeben. Für die maximale Abweichung 24 wird angenommen, dass das dem Detektor 13 nächstgelegene Elektrodenblatt 1, 2, 3 die maximale Abweichung 24 erzeugt. Für den dargestellten zweiten Stapel 5 wäre die in der ersten Kontur 17 erkennbare größte Abweichung 24 dann (wenn also das erste Elektrodenblatt 1 ganz unten im Stapel 5 angeordnet wäre) viel geringer. In diesem Fall könnten unzulässig große Abweichungen 24 nicht erkannt werden.

Wenn eine Überschreitung des Grenzwerts festgestellt wird, werden die Schritte c) und e) genau zweimal mit voneinander unterschiedlichen (zweiten) Raumkoordinaten 18, 25 und dann die Schritte f) und g) erneut durchgeführt (siehe Fig. 6 und 7).

Die ersten Raumkoordinaten 14 werden so gewählt, dass sich die Strahlenquelle 12 genau oberhalb, also in der ersten Richtung 21 fluchtend zu der Soll-Position der Kanten 9 des Stapels 5 angeordnet ist (siehe Fig. 5). Die zwei zweiten Raumkoordinaten 18, 25 (also zweite und dritte Raumkoordinaten) werden dann so gewählt, dass die Strahlenquelle 12 gegenüber den ersten Raumkoordinaten 14 in der zweiten Richtung 23 versetzt dazu angeordnet ist, einmal hin zum Stapel 5 versetzt, so dass die Strahlenquelle 12 fluchtend zu dem Stapel 5 angeordnet ist, und einmal weg vom Stapel 5 versetzt, so dass die Strahlenquelle 12 seitlich benachbart zu dem Stapel 5 angeordnet ist (siehe Fig. 6 und 7).

## Bezugszeichenliste

| | |
|---|---|
| 1 | erstes Elektrodenblatt |
| 2 | zweites Elektrodenblatt |
| 3 | drittes Elektrodenblatt |
| 4 | Ebene |
| 5 | Stapel |
| 6 | erste Position |
| 7 | zweite Position |
| 8 | dritte Position |
| 9 | Kante |
| 10 | Messvorrichtung |
| 11 | Röntgenanlage |
| 12 | Strahlquelle |
| 13 | Detektor |
| 14 | erste Raumkoordinate |
| 15 | Strahlrichtung |
| 16 | Strahl |
| 17 | erste Kontur |
| 18 | zweite Raumkoordinate |
| 19 | zweite Kontur |
| 20 | Abstand |

21 erste Richtung (y-Achse)
22 Distanz
23 zweite Richtung (z-Achse)
24 Abweichung
25 dritte Raumkoordinate
26 dritte Kontur
27 System
28 dritte Richtung (x-Achse)

**Patentansprüche**

1. Verfahren zur Bestimmung einer Ablagegenauigkeit einer Mehrzahl von Elektrodenblättern (1, 2, 3), wobei sich die Elektrodenblätter (1, 2, 3) in zueinander parallelen Ebenen (4) erstrecken und aufeinander gestapelt angeordnet sind und einen Stapel (5) bilden; wobei die Ablagegenauigkeit Positionen (6, 7, 8) der Kanten (9) aller Elektrodenblätter (1, 2, 3) zueinander in dem Stapel (5) beschreibt; wobei das Verfahren mit einer Messvorrichtung (10) durchgeführt wird, die eine zwei-dimensional auflösende Röntgenanlage (11) mit mindestens einer Strahlquelle (12) für eine Röntgenstrahlung und einen Detektor (13) aufweist, und zumindest die folgenden Schritte umfasst:

   a) Bereitstellen des Stapels (5) und Anordnen des Stapels (5) in der Messvorrichtung (10) zwischen der mindestens einen Strahlquelle (12) und dem Detektor (13);
   b) Bestrahlen des Stapels (5) mit der mindestens einen Strahlquelle (12) aus einer ersten Raumkoordinate (14), wobei eine Strahlrichtung (15) zumindest quer zu den Ebenen (4) und hin zum Detektor (13) verläuft, wobei ein Strahl (16) der Stahlquelle (12) die übereinander angeordneten Kanten (9) der Elektrodenblätter (1, 2, 3) erfasst und eine zweidimensionale erste Kontur (17) der Kanten (9) des Stapels (5) auf den Detektor (13) projiziert;
   c) Bestrahlen des Stapels (5) mit der mindestens einen Strahlquelle (12) aus mindestens einer von der ersten Raumkoordinate (14) abweichenden zweiten Raumkoordinate (18), wobei der Strahl (16) die übereinander angeordneten Kanten (9) der Elektrodenblätter (1) erfasst und eine zweidimensionale zweite Kontur (19) der Kanten (9) des Stapels (5) auf den Detektor (13) projiziert;
   d) Erfassen der ersten Kontur (17) mit dem Detektor (13);
   e) Erfassen der mindestens einen zweiten Kontur (19) mit dem Detektor (13);
   f) Auswerten der verschiedenen Konturen (17, 19) und Bestimmen der Positionen (6, 7, 8) der Kanten (9) der Elektrodenblätter (1, 2, 3).

2. Verfahren nach Patentanspruch 1, wobei sich die erste Raumkoordinate (14) und die mindestens eine zweite Raumkoordinate (18) durch einen voneinander unterschiedlichen Abstand (20) von dem Stapel (5), wobei sich der Abstand (20) entlang einer sich quer zu den Ebenen (4) erstreckenden ersten Richtung (21) erstreckt, oder durch eine voneinander unterschiedliche Distanz (22) zu den Kanten (9), wobei die Distanz (22) sich entlang einer parallel zu den Ebenen (4) und quer zu den Kanten (9) verlaufenden zweiten Richtung (23) erstreckt, unterscheiden.

3. Verfahren nach einem der vorhergehenden Patentansprüche, wobei in Schritt f) eine Zuordnung der einzelnen Kanten (9) in der jeweiligen Kontur (17, 19) zu der jeweiligen Raumkoordinate (14, 18) anhand von Geradengleichungen erfolgt.

4. Verfahren nach einem der vorhergehenden Patentansprüche, wobei in einem Schritt g) eine Bewertung der Ablagegenauigkeit erfolgt; wobei für den Stapel (5) ein Grenzwert für eine maximale Abweichung (24) der Kontur (17, 19) von einer Soll-Position (25) einer Kante (9) vorgegeben ist; wobei für die maximale Abweichung (24) angenommen wird, dass das dem Detektor (13) nächstgelegene Elektrodenblatt (1, 2, 3) die maximale Abweichung (24) erzeugt.

5. Verfahren nach Patentanspruch 4, wobei für die Bestimmung der Ablagegenauigkeit zunächst nur die Schritte a), b), d), f) und g) durchgeführt werden und die Schritte c) und e) nur dann, wenn in Schritt g) eine Überschreitung des Grenzwerts festgestellt wird.

6. Verfahren nach Patentanspruch 5, wobei, wenn eine Überschreitung des Grenzwerts festgestellt wird, die Schritte c) und e) genau zweimal mit voneinander unterschiedlichen Raumkoordinaten (18, 25) und dann die Schritte f) und g) erneut durchgeführt werden.

7. Verfahren nach Patentanspruch 6, wobei, wenn in Schritt g) wiederholt die Überschreitung des Grenzwerts festgestellt wird, die Schritte c) und e) mit einer für die eindeutige Bestimmung der Positionen (6, 7, 8) aller Kanten (9) erforderlichen Anzahl an Wiederholungen durchgeführt werden.

8. Verfahren nach einem der vorhergehenden Patentansprüche, wobei zumindest für Schritt f) eine künstliche Intelligenz eingesetzt wird.

9. Verfahren nach Patentanspruch 8, wobei das Auswerten der Konturen (17, 19) mit einem Convolutional Neural Network erfolgt; wobei das Convolutional Neural Network anhand eines synthetischen Datensatzes eines Stapels (5) mit bekannten Positionen (6, 7, 8) der Kanten (9) der Elektrodenblätter (1, 2, 3) lernt, um dann aus den gemäß Schritt d) erfassten Konturen (17, 19) die Position (6, 7, 8) der Kante (9) jedes Elektrodenblattes (1, 2, 3) zu bestimmen.

10. Verfahren nach einem der vorhergehenden Patentansprüche, wobei in einem weiteren Schritt h) aus der Bewertung der Ablagegenauigkeit gemäß Schritt g) mindestens ein für die Herstellung des jeweiligen Stapels (5) verwendeter Prozessparameter bestimmt und verändert wird, so dass eine Ablagegenauigkeit für weitere Stapel (5) verbessert wird.

**Claims**

1. Method for determining the placement accuracy of a plurality of electrode sheets (1, 2, 3), wherein the electrode sheets (1, 2, 3) extend in mutually parallel planes (4) and are arranged in a manner stacked on top of one another and form a stack (5); wherein the placement accuracy describes positions (6, 7, 8) of the edges (9) of all of the electrode sheets (1, 2, 3) relative to one another in the stack (5); wherein the method is carried out using a measuring device (10) having a two-dimensionally resolving X-ray system (11) with at least one beam source (12) for X-ray radiation and a detector (13), and comprises at least the following steps:

   a) providing the stack (5) and arranging the stack (5) in the measuring device (10) between the at least one beam source (12) and the detector (13);
   b) irradiating the stack (5) with the at least one beam source (12) from a first spatial coordinate (14), wherein a beam direction (15) extends at least transversely to the planes (4) and towards the detector (13), wherein a beam (16) from the beam source (12) detects the edges (9) of the electrode sheets (1, 2, 3) that are arranged one above the other and project a two-dimensional first contour (17) of the edges (9) of the stack (5) onto the detector (13);
   c) irradiating the stack (5) with the at least one beam source (12) from at least one second spatial coordinate (18) that differs from the first spatial coordinate (14), wherein the beam (16) detects the edges (9) of the electrode sheets (1) that are arranged one above the other and projects a two-dimensional second contour (19) of the edges (9) of the stack (5) onto the detector (13);
   d) detecting the first contour (17) using the detector (13);
   e) detecting the at least one second contour (19) using the detector (13);
   f) evaluating the different contours (17, 19) and determining the positions (6, 7, 8) of the edges (9) of the electrode sheets (1, 2, 3).

2. Method according to Claim 1, wherein the first spatial coordinate (14) and the at least one second spatial coordinate (18) differ from one another by a mutually different spacing (20) from the stack (5), wherein the spacing (20) extends along a first direction (21) extending transverse to the planes (4), or by a mutually different distance (22) from the edges (9), wherein the distance (22) extends along a second direction (23) extending parallel to the planes (4) and transverse to the edges (9).

3. Method according to either of the preceding claims, wherein, in step f), the individual edges (9) in the respective contour (17, 19) are assigned to the respective spatial coordinates (14, 18) using linear equations.

4. Method according to any one of the preceding claims, wherein, in a step g), the placement accuracy is assessed; wherein a limit value for a maximum deviation (24) of the contour (17, 19) from a target position (25) of an edge (9) is specified for the stack (5); wherein it is assumed for the maximum deviation (24) that the electrode sheet (1, 2, 3) closest to the detector (13) produces the maximum deviation (24).

5. Method according to Claim 4, wherein only steps a), b), d), f), and g) are initially carried out to determine the placement accuracy, and steps c) and e) are carried out only if it is ascertained in step g) that the limit value has been exceeded.

6. Method according to Claim 5, wherein, if it is ascertained that the limit value has been exceeded, steps c) and e) are carried out exactly twice with mutually different spatial coordinates (18, 25) and then steps f) and g) are carried out again.

7. Method according to Claim 6, wherein, if the exceeding of the limit value is repeatedly ascertained in step g), steps c) and e) are carried out with a number of repetitions required for the unambiguous determination of the positions (6, 7, 8) of all of the edges (9).

8. Method according to one of the preceding claims, wherein artificial intelligence is used at least for step f).

9. Method according to Claim 8, wherein the contours (17, 19) are evaluated using a convolutional neural network; wherein the convolutional neural network learns from a synthetic data set for a stack (5) with known positions (6, 7, 8) of the edges (9) of the electrode sheets (1, 2, 3) in order to then determine the position (6, 7, 8) of the edge (9) of each electrode sheet (1, 2, 3) from the contours (17, 19) detected according to step d).

10. Method according to any one of the preceding claims, wherein at least one process parameter used to produce the respective stack (5) is determined from the evaluation of the placement accuracy according to step g) and altered in a further step h), thereby improving the placement accuracy for further stacks (5).


**Revendications**

1. Procédé pour déterminer une précision de positionnement d'une pluralité de feuilles d'électrode (1, 2, 3), les feuilles d'électrode (1, 2, 3) s'étendant dans des plans parallèles (4) les uns aux autres et étant empilées les unes sur les autres et formant une pile (5) ; la précision de positionnement décrivant les positions (6, 7, 8) des bords (9) de toutes les feuilles d'électrode (1, 2, 3) les unes par rapport aux autres dans la pile (5) ; le procédé étant mis en œuvre au moyen d'un dispositif de mesure (10) qui comprend une installation à rayons X à résolution bidimensionnelle (11) avec au moins une source de rayonnement (12) pour un rayonnement X et un détecteur (13), et qui comprend au moins les étapes suivantes :

a) fournir la pile (5) et disposer la pile (5) dans le dispositif de mesure (10) entre ladite moins une source de rayonnement (12) et le détecteur (13) ;
b) irradier la pile (5) avec au moins une source de rayonnement (12) à partir d'une première coordonnée spatiale (14), une direction de rayonnement (15) s'étendant au moins transversalement aux plans (4) et vers le détecteur (13), un rayon (16) de la source de rayonnement (12) détectant les bords (9) superposés des feuilles d'électrode (1, 2, 3) et projetant un premier contour bidimensionnel (17) des bords (9) de la pile (5) sur le détecteur (13) ;
c) irradier la pile (5) avec au moins une source de rayonnement (12) à partir d'au moins une deuxième coordonnée spatiale (18) différente de la première coordonnée spatiale (14), le rayon (16) balayant les bords (9) des feuilles d'électrode (1) disposées les unes au-dessus des autres et projetant un deuxième contour bidimensionnel (19) des bords (9) de la pile (5) sur le détecteur (13) ;
d) détecter le premier contour (17) avec le détecteur (13) ;
e) détecter le deuxième contour (19) au moins au moyen du détecteur (13) ;
f) analyser les différents contours (17, 19) et déterminer les positions (6, 7, 8) des bords (9) des feuilles d'électrode (1, 2, 3).

2. Procédé selon la revendication 1, dans lequel la première coordonnée spatiale (14) et ladite au moins une deuxième coordonnée spatiale (18) sont **caractérisées par** une distance (20) différente l'une de l'autre par rapport à la pile (5), la distance (20) s'étendant le long d'une première direction (21) s'étendant transversalement aux plans (4), ou par une distance (22) différente les unes des autres par rapport aux bords (9), la distance (22) s'étendant le long d'une deuxième direction (23) parallèle aux plans (4) et transversale aux bords (9).

3. Procédé selon l'une des revendications précédentes, dans lequel, à l'étape f), une affectation des bords individuels (9) dans le contour respectif (17, 19) à la coordonnée spatiale respective (14, 18) est effectuée en utilisant des équations de droite.

4. Procédé selon l'une des revendications précédentes, dans lequel, à une étape g), une évaluation de la précision de positionnement est effectuée ; une valeur limite étant prédéfinie pour la pile (5) pour un écart maximal (24) du contour (17, 19) par rapport à une position souhaitée (25) d'un bord (9) ; pour l'écart maximal (24), il est supposé que la feuille d'électrodes (1, 2, 3) la plus proche du détecteur (13) produit l'écart maximal (24).

5. Procédé selon la revendication 4, dans lequel, pour déterminer la précision de positionnement, seulement les étapes a), b), d), f) et g) sont d'abord mises en œuvre, et les étapes c) et e) uniquement si un dépassement de la valeur limite est constaté à l'étape g).

6. Procédé selon la revendication 5, dans lequel, si un dépassement de la valeur limite est constaté, les étapes c) et e) sont répétées exactement deux fois avec des coordonnées spatiales différentes (18, 25), puis les étapes f) et g) sont à nouveau exécutées.

7. Procédé selon la revendication 6, dans lequel, si le dépassement de la valeur limite est à nouveau constaté à l'étape g), les étapes c) et e) sont mises en œuvre avec un nombre de répétitions nécessaire à la détermination sans ambiguïté des positions (6, 7, 8) de tous les bords (9).

8. Procédé selon l'une des revendications précédentes, dans lequel une intelligence artificielle est utilisée au moins pour l'étape f).

9. Procédé selon la revendication 8, dans lequel l'évaluation des contours (17, 19) est effectuée en utilisant un réseau neuronal convolutif ; le réseau neuronal convolutif apprend à partir d'un ensemble de données synthétiques d'une pile (5) ayant des positions connues (6, 7, 8) des bords (9) des feuilles d'électrode (1, 2, 3), afin de déterminer ensuite la position (6, 7, 8) du bord (9) de chaque feuille d'électrode (1, 2, 3) à partir des contours (17, 19) détectés à l'étape d).

10. Procédé selon l'une des revendications précédentes, dans lequel, dans une étape supplémentaire h), au moins un paramètre de processus utilisé pour la fabrication de la pile respective (5) est déterminé et modifié à partir de l'évaluation de la précision de positionnement selon l'étape g), de sorte qu'une précision de positionnement pour d'autres piles (5) est améliorée.

**Fig. 1**

Fig. 2

EP 4 113 107 B1

**Fig. 3**

**Fig. 4**

**Fig. 5**

**Fig. 6**

**Fig. 7**

**Fig. 8**

**Fig. 9**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- KR 1020200088222 A
- WO 2016114257 A1
- DE 102020112814 A1
- KR 102236815 B1
- EP 3826090 A1
- JP 2011039014 A